# EUROPEAN PATENT SPECIFICATION

(11) **EP 0 622 913 B1**
(45) Date of publication and mention of the grant of the patent: **31.07.2002**
(21) Application number: 94106769.6
(22) Date of filing: 29.04.1994
(51) Int. Cl.: H04B 10/14

(54) **Optical transmission apparatus with a directly modulated emitter and an optical filtering before the receiver**
Vorrichtung für optische Übertragung mit direkter Modulation des Senders und optischer Filterung beim Empfänger
Dispositif de transmission optique avec émetteur directement modulé et filtrage optique en amont du récepteur

(30) Priority: 30.04.1993 JP 10385193
(43) Date of publication of application: 02.11.1994
(73) Proprietor: MATSUSHITA ELECTRIC INDUSTRIAL CO., LTD., Kadoma-shi, Osaka 571-8501 (JP)
(72) Inventor: Asakura, Hiroyuki, Osaka-shi, Osaka 543-0015 (JP); Iida, Masanori, Neyagawa-shi, Osaka 572 (JP); Morikura, Susumu, Yawata-shi, Kyoto 614 (JP)
(74) Representative: Grünecker, Kinkeldey, Stockmair & Schwanhäusser Anwaltssozietät

(56) References cited:
- EP-A- 0 381 341
- EP-A- 0 530 025
- EP-A- 0 534 644
- ELECTRONICS LETTERS., vol.26, no.6, 15 March 1990, STEVENAGE GB pages 376 - 377 H.TOBA ET AL '100-Channel Optical FDM Transmission/Distribution at 622 Mbit/s over 50km utilising a waveguide frequency selection switch'
- IEEE GLOBAL TELECOMMUNICATIONS CONFERENCE AND EXHIBITION , GLOBECOM '90, vol.3, no.803, 2 December 1990, SAN DIEGO,CALIFORNIA,US pages 1529 - 1533 K.Y.ENG ET AL 'Optical FDM Switch Experiments with Tunable Fiber Fabry-Perot Filters'

## Description

The present invention relates to an optical transmitting apparatus used for optical communication.

From document EP-A-0534644 there is known an optical transmitting apparatus, having a light source, a wavelength selecting element, an optical fiber, and an optical/electrical converter. A transmitter adds a pilot carrier or signal to the data to be transmitted. The frequency of the pilot carrier is chosen to be below or above the frequency band applied to the data. The optical filter controller generates a frequency so that it coincides with that of the transmitted optical carrier signal.

From document EP-A-0530025 there is already known an optical transmitting apparatus with a light source, a fiber, and tunable filter, whereby the center of wavelength of the transmission of the band pass filter can be adjusted. This document teaches to set the transmission bandwidth of the filter to coincide with high precision with the center of the wavelength of transmission.

Document EP-A-0381341 discloses an apparatus wherein an optical branching device is used for the detection of an optical signal.

Recently, optical communication systems tend to transmit a larger amount of data at a higher rate through a longer distance. To meet these needs, several technologies of controlling the wavelength of the light have been studied.

For example, there has been performed an attempt to insert an optical filter into a transmitting path to improve the quality of a transmitting signal, and performed a wavelength multi-transmission by which a plurality of optical signals having different wavelengths are multiplexed so that a multi-channel transmission is performed through a length of an optical fiber.

These optical transmitting apparatus comprise a light source drive section for receiving an input signal, an output light source, an optical filter, an optical fiber for transmitting a signal, an optical/electrical converter, and a demodulator. When an optical signal is transmitted, a directly modulated output light from the output light source develops a wavelength spread called a chirping. Where a bias current of the output light source is significantly higher than a threshold current, the wavelength is shifted when the modulated pulse is on or off. Therefore, inserting the optical filter causes only an on-level signal light having a short wavelength to be passed. This causes an off-level light having a long wavelength to be removed, thereby increasing the extinction ratio of a transmitting signal and improving the transmitting quality thereof. (Japanese Laid-Open Patent HEI 1-296726)

As the transmitting system advanced, optical amplification and wavelength multi-transmitting technologies have been used. Using such optical amplifier as a repeater allows a large-capacity and economical system to be constructed without a necessity to convert once an optical signal to an electric signal as with prior art.

An example of using the optical amplifier has a noise component due to a spontaneous emitted light in an amplified optical signal. In order to remove such noisy light and improve its noise level, a narrow-band wavelength filter is inserted to filter the signal light. Further, in order to cancel a variation in the wavelength of the output light source, a follow-up control is performed in such a manner that an outlet level of a wavelength selecting element is detected to make a passing wavelength of the wavelength selecting element coincident with the central wavelength of the output light. (Japanese Laid-Open Patent HEI 4-340517)

Also, for a system to transmit a wavelength multi-signal, in selecting the channel of a signal light, a similar signal detection is performed. (Electronics Letter, Vol. 26,No. 2, p. 2122, 1990)

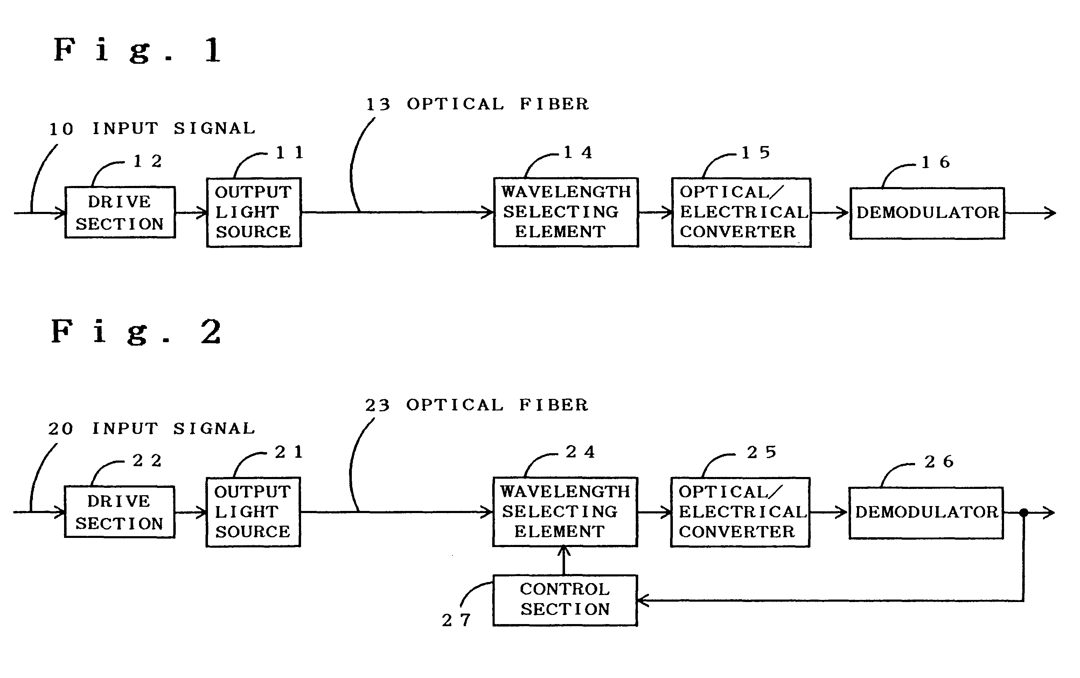

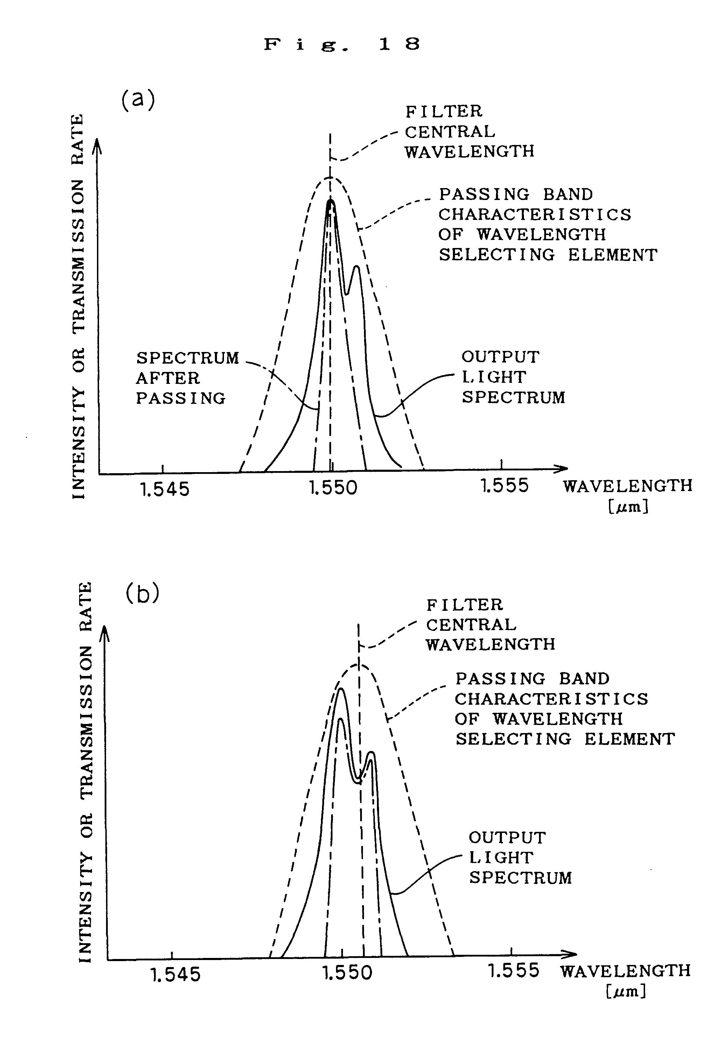

However, in these transmitting systems, a setting control or follow-up control is performed in such a manner as to make the central wavelength in the passing band of a wavelength selecting element coincident with the central wavelength of the transmitted light so that the intensity of a selected signal light becomes maximum, as shown in Figs. 2 (a) and 18 (a). The difference in spectrum shape between Figs. 2 (a) and 18 (a) is due to the difference between the drive conditions of the light source. Where a semiconductor laser is directly modulated, a symmetrical or asymmetrical wavelength spread phenomenon called a chirping occurs in an output light, so that in a condition that the intensity of an optical output filtered by a wavelength selecting element is maximum, its signal component becomes not always maximum. Further, when a modulated signal component passes through an optical filter, part of the component is removed. As a result, particularly in pulse modulation, the chirping occurs in a pulse rise portion. Therefore, the rise portion is removed by the wavelength selecting element to cause a deterioration in demodulated signal quality.

An object of the present invention is to provide an optical transmitting apparatus for detecting a transmitting signal component in an optimum manner in an optical fiber transmission.

This object is met by the features of claim 1.

The above-mentioned composition can provide an optical transmitting apparatus for making less a deterioration of a received signal and for detecting a required signal component in an optimum manner.

Fig. 1 is a block diagram of an optical transmitting apparatus as an example useful for understanding the invention.

Fig. 2 is a block diagram of an optical transmitting apparatus in one embodiment of the present invention.

Fig. 3 is a graph showing a relationship between a generating wavelength of a light source and wavelength transmission characteristics of a wavelength selecting element.

Fig. 4 is a graph showing a measured signal-to-noise ratio of a demodulated signal with respect to a displacement of the generating wavelength center of an output signal source from the passing wavelength center of a wavelength selecting element.

Fig. 6 is a block diagram of an optical transmitting apparatus of the present invention.

Fig. 7 is a block diagram of an optical transmitting apparatus in another example useful for understanding the invention.

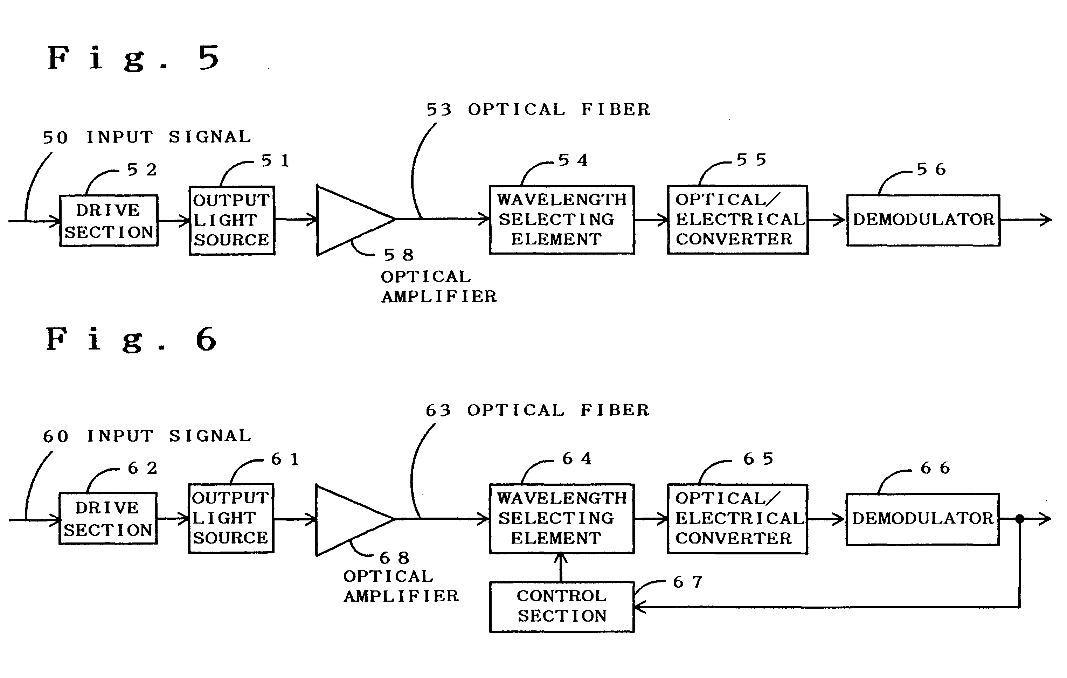

Fig. 5 is another example of a block diagram of an optical transmitting apparatus useful for understanding the invention.

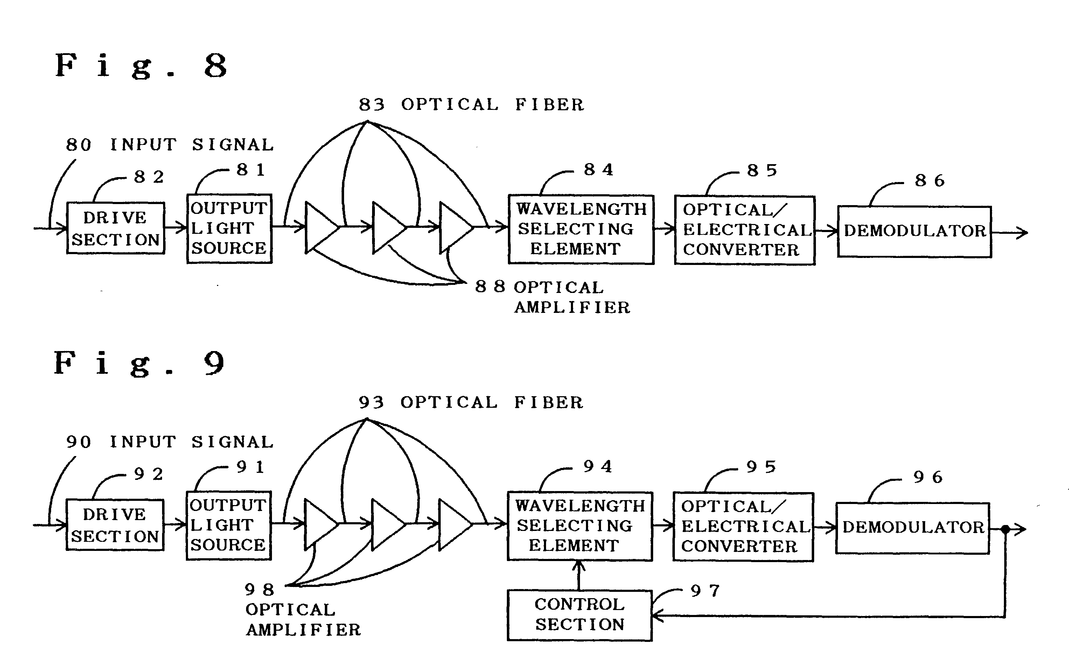

Fig. 8 is a block diagram of an optical transmitting apparatus in another embodiment of the present invention.

Fig. 9 is a block diagram of an optical transmitting apparatus in another embodiment of the present invention.

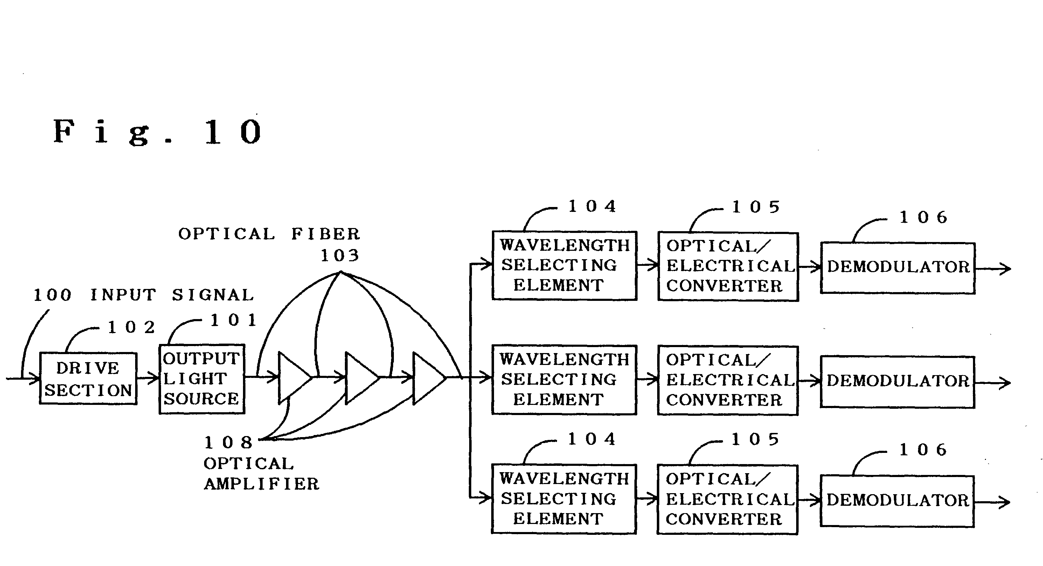

Fig. 10 is a block diagram of an optical transmitting apparatus in another example useful for understanding the invention.

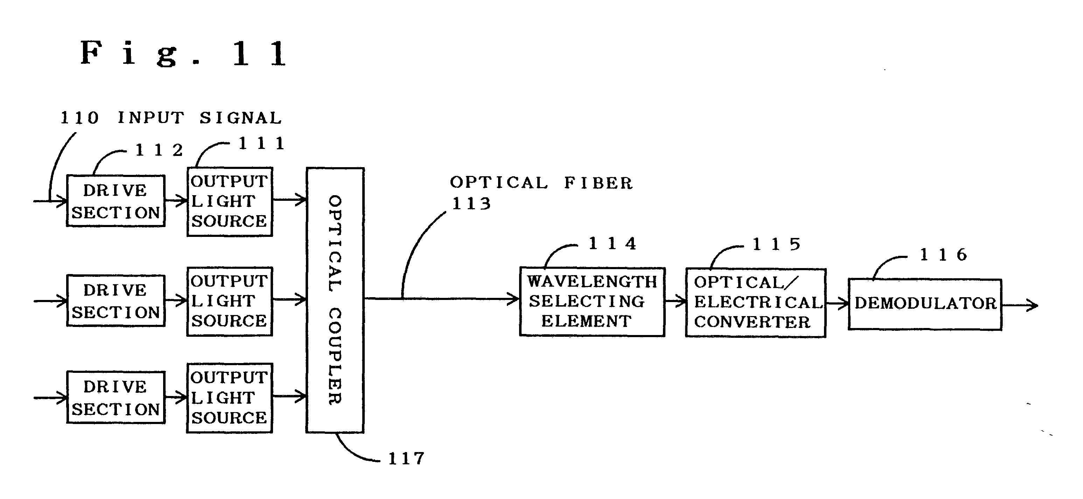

Fig. 11 is a block diagram of an optical transmitting apparatus in another example useful for understanding the present invention.

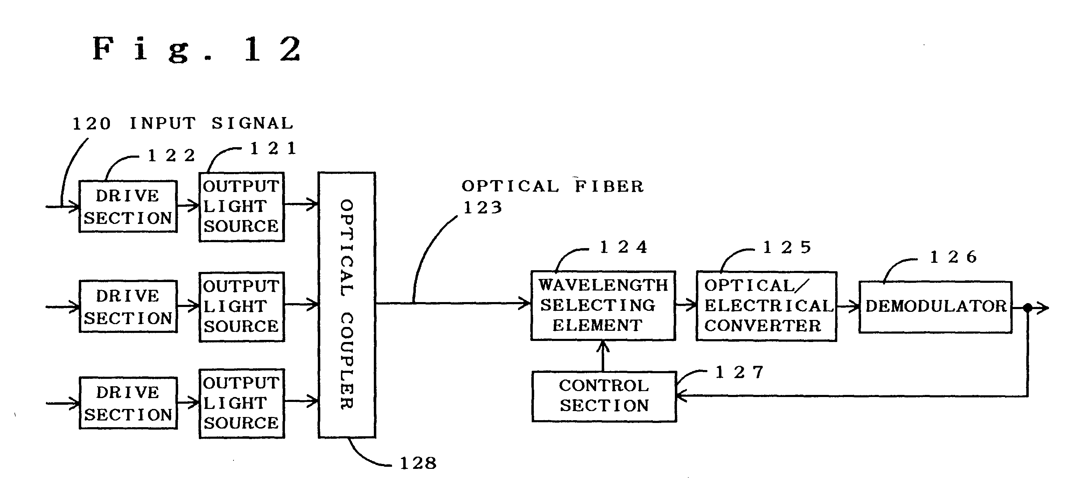

Fig. 12 is a block diagram of an optical transmitting apparatus in another embodiment of the present invention.

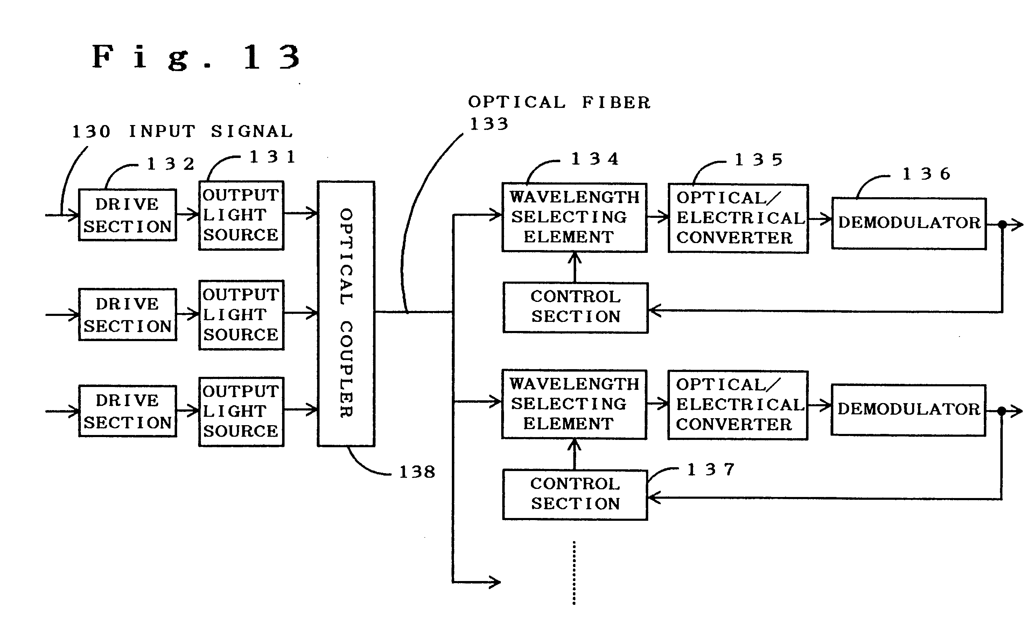

Fig. 13 is a block diagram of an optical transmitting apparatus in another embodiment of the present invention.

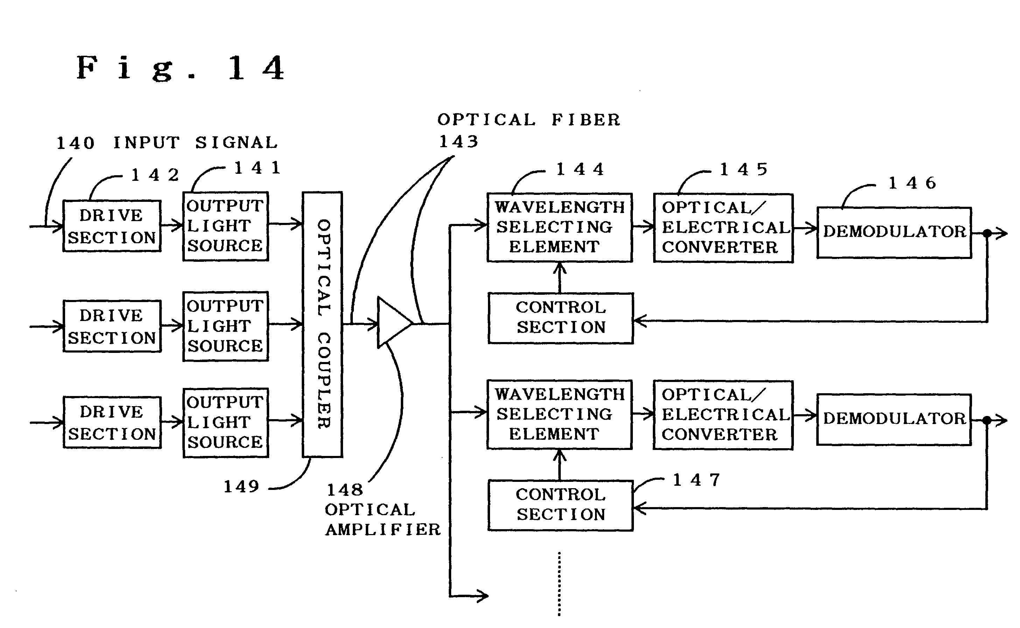

Fig. 14 is a block diagram of an optical transmitting apparatus in another embodiment of the present invention.

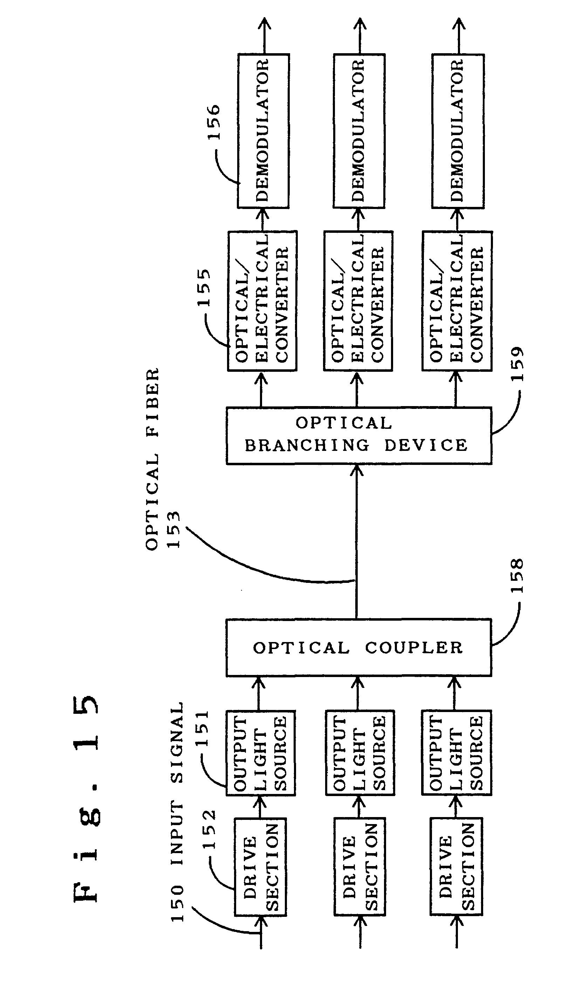

Fig. 15 is a block diagram of an optical transmitting apparatus in another example useful for understanding the present invention.

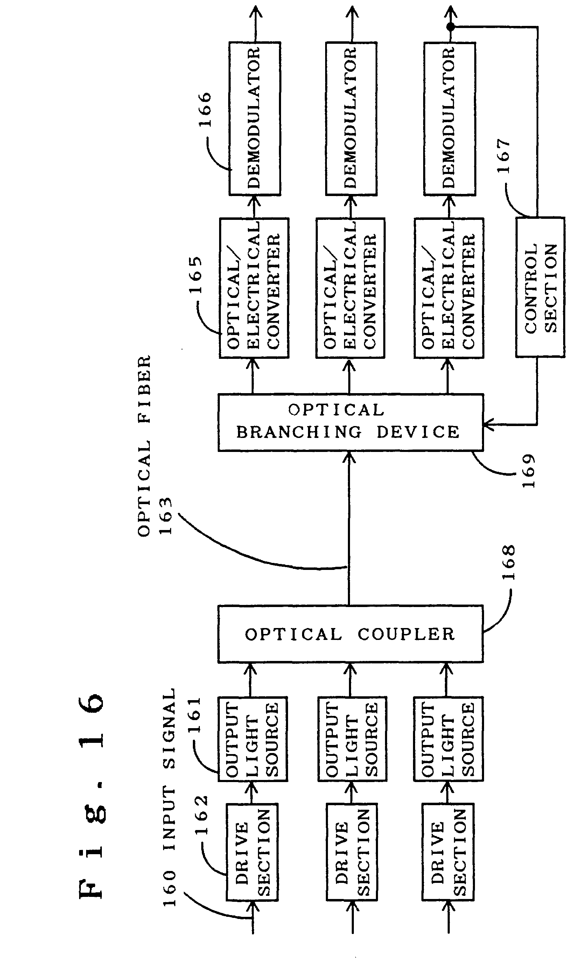

Fig. 16 is a block diagram'of an optical transmitting apparatus in another embodiment of the present invention.

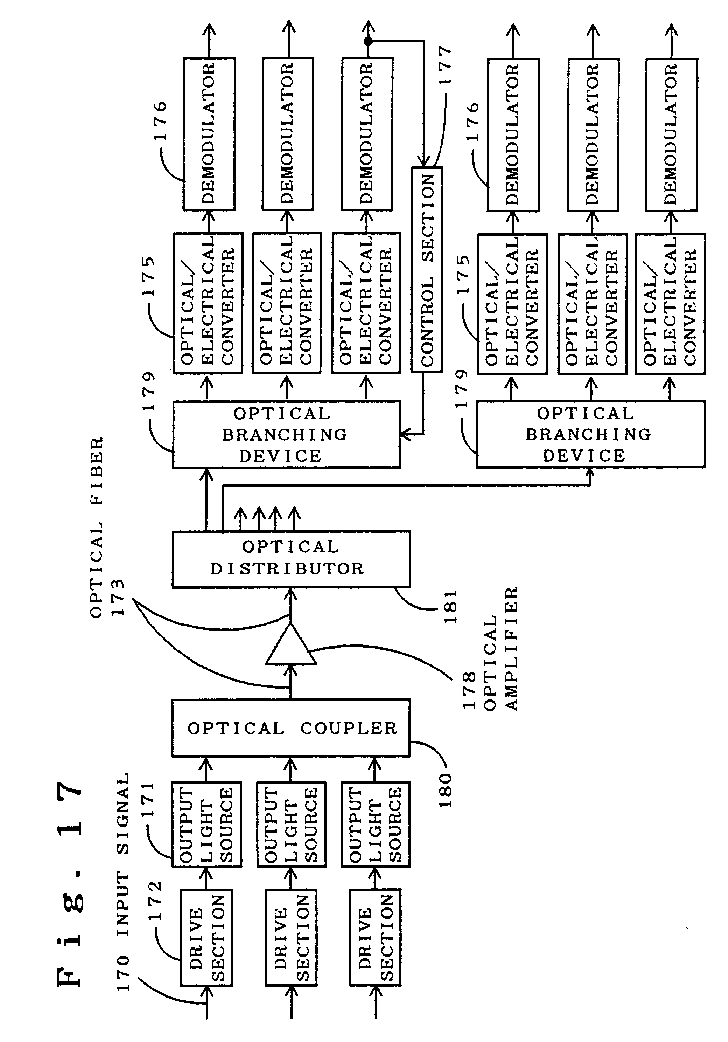

Fig. 17 is a block diagram of an optical transmitting apparatus in another embodiment of the present invention.

Fig. 18 is a graph showing a relationship between a generating wavelength of a light source and wavelength transmission characteristics of a wavelength selecting element.

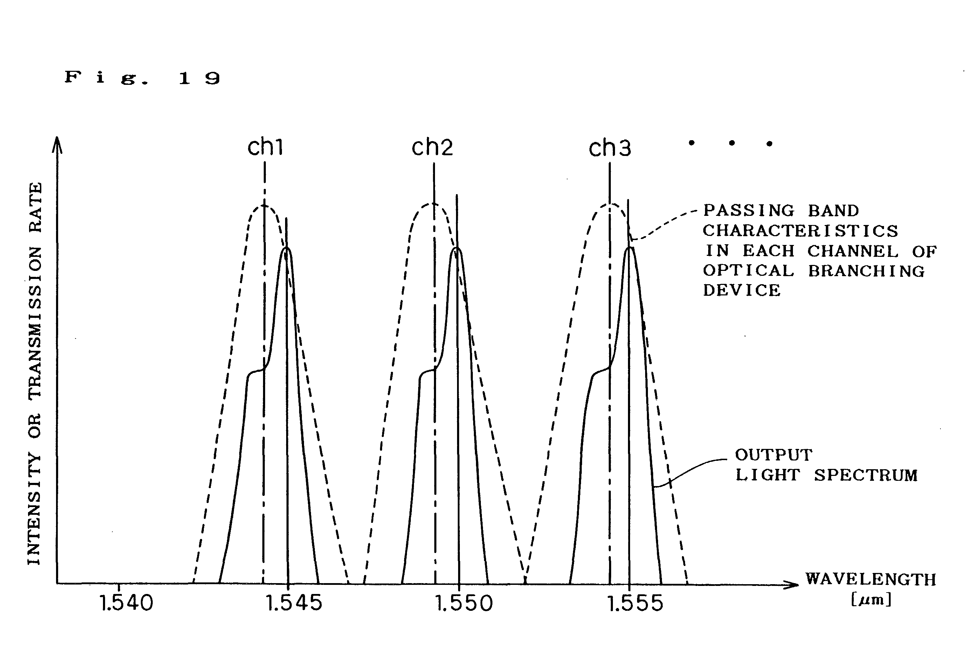

Fig. 19 is a graph showing a relationship between a generating wavelength of a light source group and wavelength transmission characteristics in each channel of a branching device.

With reference to drawings, an optical transmitting apparatus will be explained hereinafter. Fig. 1 shows a block diagram of a first example useful in understanding the present invention. As shown in Fig. 1, an input signal 10 is inputted into a drive section 12, which directly modulates a light source 11 such as a semiconductor laser, and thus converted to an optical signal, and transmitted through an optical fiber 13. Due to a carrier fluctuation, the directly modulated optical signal develops a distortion or spread in an optical spectrum. The optical signal transmitted through the optical fiber is filtered by a wavelength selecting element 14, and converted by an optical/electrical converting section 15 to an electric signal. Further, it is demodulated by a demodulator 16 to a required signal. The center of the wavelength passing band of the wavelength selecting element 14 is set to a position displaced from a peak in the optical spectrum of the output light source, so that a required parameter in the demodulated signal becomes optimum.

Preferably, where a pulse coded signal is used as the input signal 10, the central passing band wavelength of the wavelength selecting element 14 is set in such a manner that the error rate or pulse jitter of the demodulated signal becomes minimum, or a certain value or less, or that the signal-to-noise ratio becomes maximum, or a certain value or more.

In this case, as the input signal 10, an error-detectable modulation code mode is used such as a block code including a CMI code or an 8B10B, and using such signal, the output light source 11 is directly modulated. The modulated optical signal is transmitted through the optical fiber 13 and demodulated by the demodulator 16 to a digital signal. When the optical signal is demodulated, an error correction is performed. Utilizing the error correction, the central passing band wavelength of the wavelength selecting element 14 is set in such a manner that the error correction becomes minimum, or a certain value or less.

Part of a clock signal regenerated together with the demodulated signal is caused to pass through an electrical filter such as a band-pass filter so as to take out a fundamental frequency component. A residual FM noise generated in the signal by a jitter component is detected, and the central passing band wavelength of the wavelength selecting element 14 is set in such a manner that the noise level becomes minimum,or a certain value or less.

Where an image signal is pulsed, FM modulated and transmitted, the development of a pulse jitter due to the transmission causes the S/N of the TV signal to be deteriorated. Therefore, part of a synchronizing signal outputted from the modulator is clamped by a clamp circuit. A fluctuation in the signal level is detected, and the central passing band wavelength of the wavelength selecting element 14 is set in such a manner that the fluctuating component becomes minimum, or a certain value or less.

The output light source in this example is not limited to a semiconductor laser, and may be a light emitting diode.

Preferably, where an analog signal is used as the input signal 10, the central passing band wavelength of the wavelength selecting element 14 is set in such a manner that the carrier wave signal-to-noise becomes maximum, or a certain value or more, or that the distortion becomes minimum, or a certain value or less.

In this case, part of the output from the optical/electrical converting section 15 is inputted into the electrical filter to detect the frequency component of a carrier wave signal and the signal level within a certain band. These two signal components are direct-current converted by an integrator and the like to compare them to each other through division process. The central passing band wavelength of the wavelength selecting element 14 is set in such a manner that the divided value becomes maximum, or a certain value or more.

Instead of the signal level within a certain band, the higher harmonic component of a carrier wave within the highfrequency region developed due to a transmission distortion is detected. The higher harmonic component is direct-current converted by an integrator and the like to compare to the carrier wave signal level through division process. The central passing band wavelength of the wavelength selecting element 14 is set in such a manner that the divided value becomes maximum, or a certain value or more.

Preferably, where a multiplexed signal is used as the input signal 10, the central passing band wavelength of the wavelength selecting element 14 is set in such a manner that either the signal-to-noise ratio of the demodulated signal or the signal-to-noise ratio of a certain carrier wave signal becomes maximum, or a certain value or more, or that the distortion becomes minimum, or a certain value or less, or that a predetermined parameter in the multiplexed pilot signal becomes optimum.

In this case, part of the output from the optical/electrical converting section 15 is inputted into the electrical filter to detect either the frequency component of a carrier wave signal of a predetermined channel or a controlling pilot signal multiplexed previously when outputted and the signal level within a certain band. These two signal components are direct-current converted by an integrator and the like to compare them to each other through division process. The central passing band wavelength of the wavelength selecting element 14 is set in such a manner that the divided value becomes maximum, or a certain value or more.

Instead of the signal level within a certain band, a distortion signal component developed due to a transmission distortion is detected, and direct-current converted by an integrator and the like to compare to the carrier wave signal level through division process. The central passing band wavelength of the wavelength selecting element 14 is set in such a manner that the divided value becomes maximum, or a certain value or more.

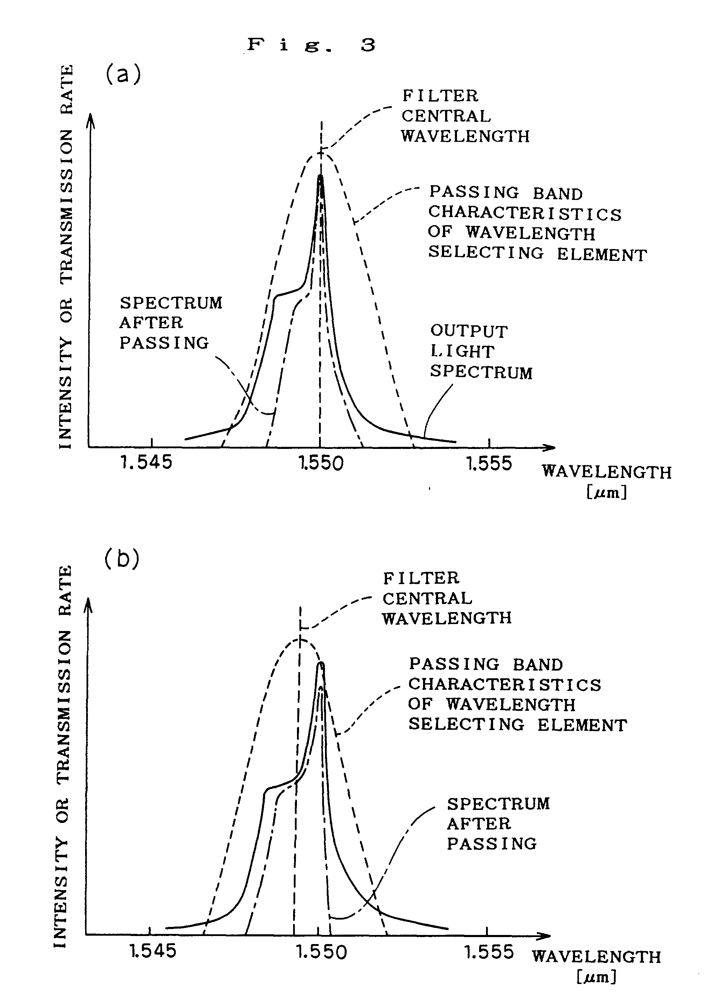

Preferably, for a direct pulse modulation in which in the light outputting source 11, a bias current is set to a value near a threshold, as shown in Fig. 3 (b), the central wavelength of the wavelength selecting element is set to the short wavelength side with respect to the spectrum peak of the light outputting source 11. Although in this embodiment, the signal is transmitted through the optical fiber 13 followed by the wavelength selecting element 14, the signal processing procedure is not limited to such a manner. Even where the output light from the output light source 11 is directly inputted into the wavelength selecting element 14, and then transmitted through the optical fiber 13, a similar effect can be obtained.

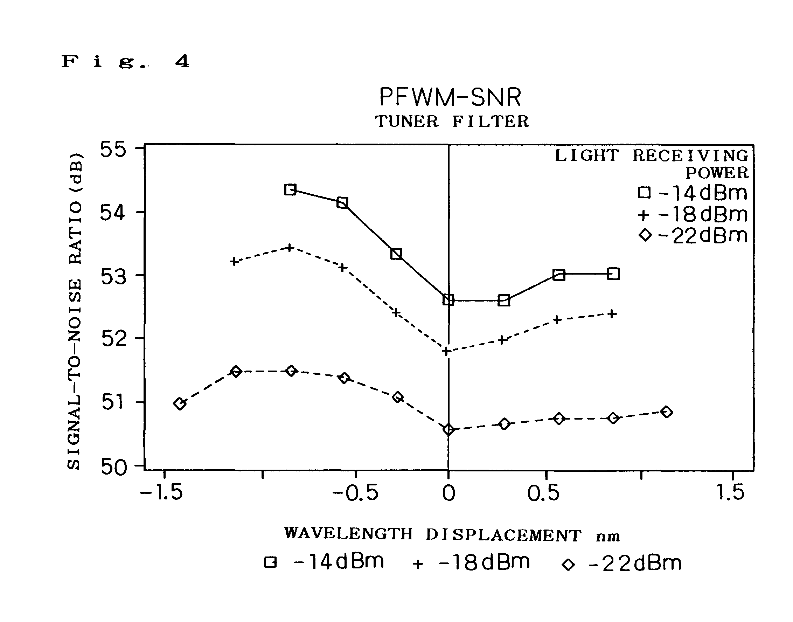

Fig. 4 shows an example of results obtained by verifying experimentally the present invention. It shows results obtained by measuring both the displacement of the light source from the central wavelength of the wavelength selecting element and the signal-to-noise ratio where a DFB laser is direct-current biased near at a threshold, directly pulsed and modulated. An optical filter having a passing band (full width at half maximum) of 1.3 nanometer was used as the wavelength selecting element. As seen from the results, the central passing band wavelength of the wavelength selecting element 14 is set to the short wavelength side, thereby allowing a good signal demodulation. This is a phenomenon developed due to a fact that when a pulse is modulated, the chirping effect causes a transient signal component of the pulse to be contained in the short wavelength side with respect to the wavelength peak.

Where the bias current of the output light source is larger compared with a threshold current, as shown in Fig. 18 (b), the central wavelength of the wavelength selecting element 14 is set in such a manner that the wavelength is displaced to the long wavelength side from the peak wavelength of the light outputting source, thereby making the jitter of the demodulated signal small.

Fig. 2 shows an embodiment of the present embodiment. As shown in Fig. 2, an input signal 20 is inputted into a drive section 22, which directly modulates a light source 21 such as a semiconductor laser. The electric signal is converted to an optical signal, and transmitted through an optical fiber 23. Due to a carrier fluctuation, the directly modulated optical signal develops a distortion or spread in an optical spectrum. On the signal receiving side, the optical signal is passed through a wavelength selecting element 24 to be optically filtered, and then converted by an optical/electrical converting section 25 to an electric signal and demodulated by a demodulator 26 to a required signal. The passing wavelength of the wavelength selecting element 24 is follow-up controlled by a control section 27 in such a manner that a required signal parameter in the demodulated signal becomes optimum.

Preferably, where a pulse coded signal is used as the input signal 20, the central passing band wavelength of the wavelength selecting element 24 is follow-up controlled in such a manner that the error rate or pulse jitter of the demodulated signal becomes minimum, or a certain value or less, or that the signal-to-noise ratio becomes maximum, or a certain value or more.

In this case, as the input signal 20, an error-detectable modulation code mode is used such as a block code including a CMI code or an 8B10B, and using such signal, the light outputting source 21 is directly modulated. The modulated optical signal is transmitted through the optical fiber 23 and demodulated by the demodulator 26 to a digital signal. When the optical signal is demodulated, an error correction is performed. Utilizing the error correction, the central passing band wavelength of the wavelength selecting element 24 is follow-up controlled in such a manner that the error correction becomes minimum, or a certain value or less.

Part of a clock signal regenerated together with the demodulated signal is caused to pass through an electrical filter such as a band-pass filter so as to take out a fundamental frequency component. A residual FM noise generated by the jitter in the component is detected, and the central passing band wavelength of the wavelength selecting element 24 is follow-up controlled in such a manner that the noise level becomes minimum, or a certain value or less.

Where an TV signal is pulsed, FM modulated and transmitted, the development of a pulse jitter due to the transmission causes the S/N of the image signal to be deteriorated. Therefore, part of a synchronizing signal outputted from the modulator is clamped by a clamp circuit, and a fluctuation in the signal level is detected. The central passing band wavelength of the wavelength selecting element 24 is follow-up controlled in such a manner that the fluctuating component becomes minimum, or a certain value or less.

Preferably, where an analog signal is used as the input signal 20, the central passing band wavelength of the wavelength selecting element 24 is follow-up controlled in such a manner that the carrier wave signal-to-noise becomes maximum, or a certain value or more, or that the distortion becomes minimum, or a certain value or less.

In this case, part of the output from the optical/electrical converting section 25 is inputted into the electrical filter to detect the frequency component of a carrier wave signal and the signal level within a certain band, and these two signal components are direct-current converted by an integrator and the like to compare them to each other through division process. The central passing band wavelength of the wavelength selecting element 24 is follow-up controlled in such a manner that the divided value becomes maximum, or a certain value or more.

Instead of the signal level within a certain band, the higher harmonic component of a carrier wave within the highfrequency region developed due to a transmission distortion is detected, and the higher harmonic component is direct-current converted by an integrator and the like to compare to the carrier wave signal level through division process. The central passing band wavelength of the wavelength selecting element 24 is follow-up controlled in such a manner that the divided value becomes maximum, or a certain value or more.

Preferably, where a multiplexed signal is used as the input signal 20, the central passing band wavelength of the wavelength selecting element 24 is follow-up controlled in such a manner that either the signal-to-noise ratio of the demodulated signal or the signal-to-noise ratio of a certain carrier wave signal becomes maximum, or that the distortion becomes minimum, or that a predetermined parameter in the multiplexed pilot signal becomes optimum.

In this case, part of the output from the optical/electrical converting section 25 is inputted into the electrical filter to detect either the frequency component of a carrier wave signal of a predetermined channel or a controlling pilot signal multiplexed previously when outputted and the signal level within a certain band. These two signal components are direct-current converted by an integrator and the like to compare them to each other through division process. The central passing band wavelength of the wavelength selecting element 24 is follow-up controlled in such a manner that the divided value becomes maximum, or a certain value or more.

Instead of the signal level within a certain band, a distortion signal component developed due to a transmission distortion is detected, and direct-current converted by an integrator and the like to compare to the carrier wave signal level through division process. The central passing band wavelength of the wavelength selecting element 24 is follow-up controlled in such a manner that the divided value becomes maximum, or a certain value or more.

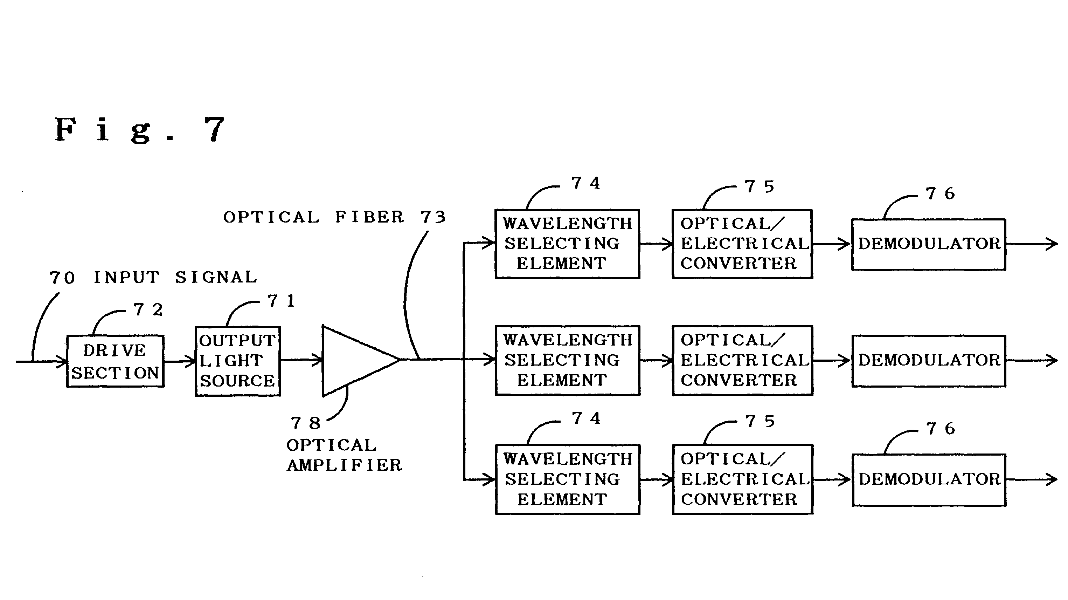

An optical amplifier may be used in the embodiments of the present invention. An embodiment using such an amplifier is shown in Fig. 6 and such an amplifier is used in the example of Fig. 5. The embodiment is characterized in that amplifiers 58, 68 are inserted, and the arrangement allows a long-distance transmission. The insertion of an optical amplifier as mentioned above allows the optical signal to be distributed and transmitted through a plurality of signal receiving sections as shown in Fig. 7. The position into which wavelength selecting elements 54, 64 are inserted is not always limited to such an arrangement. Even where they are located at the input of the optical amplifiers 58, 68, similar results are obtained.

Further, as shown in Figs. 8, 9 and 10, connecting in series a plurality of optical amplifiers 88 allows a much longer repeater spacing and an increased number of distributions. Where the above optical amplifiers 88, 98 and 108 are connected in series, a wavelength selecting element 84 is not limited in location to only a position before the input of a signal receiver, but may be inserted into the input/output of the optical amplifiers 88 or between them.

Fig. 11 shows another example useful in understanding the present invention. In this example, an input signal group 110 is inputted into respective drive sections 112, which directly modulate directly-modulatable output light sources 111 such as a semiconductor laser, and thus converted to an optical signal. The output light sources 111 generate signal lights having wavelengths λ1, λ2 and λ3 corresponding to respective channels. These signal lights are coupled to an optical fiber 113 by an optical coupler 117 or an optical combining device, and thus multiplexed in wavelength and transmitted. Due to a carrier fluctuation, the directly modulated optical signal develops a distortion or spread in an optical spectrum. On the light receiving side, a signal light of a required channel is selected in wavelength through a wavelength selecting element 114 (an optical tuner). The signal light is then converted by an optical/electrical converting section 115 to an electrical signal, and demodulated by a modulator 116 to a required signal. The central passing band wavelength of the wavelength selecting element 114 is set to a position displayed from the peak in the optical spectrum of an output light source selected by the wavelength selecting element 114 in such a manner that a required parameter in the demodulated signal becomes optimum as shown in Fig. 3.

Fig. 12 shows another embodiment of the present embodiment. In this embodiment, an input signal group 120 is inputted into respective drive sections 122, which directly modulate directly-modulatable output light sources 121 such as a semiconductor laser, and thus converted to an optical signal. The output light sources 121 generate signal lights having wavelengths λ1, λ2 and λ3 corresponding to respective channels. These signal lights are coupled to an optical fiber 123 by an optical coupler 128 or an optical combining device, and thus multiplexed in wavelength and transmitted. Due to a carrier fluctuation, the directly-modulated optical signal develops a distortion or spread in an optical spectrum. On the light receiving side, a signal light of a required channel is selected in wavelength through a wavelength selecting element 124 (an optical tuner). The signal light is then converted by an optical/electrical converting section 125 to an electrical signal, and demodulated by a modulator 126 to a required signal. The central passing band wavelength of the wavelength selecting element 124 is set to and follow-up controlled a position displayed from the peak in the optical spectrum of an output light source selected by the wavelength selecting element 124 in such a manner that a required parameter in the demodulated signal becomes optimum as shown in Fig. 3 (b).

Also, in this embodiment, the signal may be transmitted to a plurality of light receiving sections as shown in Fig. 13. Further, as shown in Fig. 14, the use of an optical amplifier 148 allows the signal to be transmitted through a longer distance to a number of light receiving sections.

Fig. 15 shows another example useful in understanding the present invention. In this example, an input signal group 150 is inputted into respective drive sections 152, which directly modulate directly-modulatable output light sources 151 such as a semiconductor laser, and thus converted to an optical signal. The output light sources 151 generate signal lights having wavelengths λ1, λ2 and λ3 corresponding to respective channels. These signal lights are coupled to an optical fiber 153 by an optical coupler 158 or a light combiner, and thus multiplexed in wavelength and transmitted. Due to a carrier fluctuation, the directly modulated optical signal develops a distortion or spread in an optical spectrum. On the light receiving side, a signal light of each channel is selected in wavelength through an optical branching device 159. The signal light is then converted by an optical/electrical converting section 155 to an electrical signal, and demodulated by a demodulator 156 to a required signal. The central passing band wavelength of each channel of the optical branching device 159 is set to a position displayed from the peak in the optical spectrum of an output light source selected in such a manner that a required parameter in the demodulated signal becomes optimum as shown in Fig. 19. Although in this example, the selected wavelength center of each channel of the branching device is set to the short wavelength side with respect to the wavelength center of each output light, the selected wavelength center may be set to the long wavelength side depending upon modulation system, drive conditions of light source and chirping characteristics.

Fig. 16 shows another embodiment of the present invention. In this embodiment, an input signal group 160 is inputted into respective drive sections 162, which directly modulate directly-modulatable output light sources 161 such as a semiconductor laser, and thus converted to an optical signal. The output light sources 161 generate signal lights having wavelengths λ1, λ2 and λ3 corresponding to respective channels. These signal lights are coupled to an optical fiber 163 by an optical coupler 168 or an optical combining device, and thus multiplexed in wavelength and transmitted. Due to a carrier fluctuation, the directly-modulated optical signal develops a distortion or spread in an optical spectrum. On the light receiving side, a signal light of each channel is selected in wavelength through an optical branching device 169, and then each channel is converted by an optical/electrical converting section 165 to an electrical signal, and demodulated by a modulator 166 to a required signal. The central passing band wavelength of each channel of the optical branching device 169 is set to and follow-up controlled a position displayed from the peak in the optical spectrum of a light outputting source selected in such a manner that a required parameter becomes optimum using the modulated signal of a certain channel as shown above.

In this embodiment, the signal may be amplified by an optical amplifier 178 and distributed by an optical distributor 181, thereby being transmitted to a plurality of receiving sections as shown in Fig. 17.

Preferably, the output light source of the present invention employs an external resonance type semiconductor laser or a directly-modulatable longitudinal single mode generating type semiconductor laser such as a DFB laser and a DBR laser.

Preferably, used in the optical amplifier of the present invention is an optical fiber in which a rare earth element is doped.

Preferably, erbium, praseodymium or neodymium is used as the rare earth element.

Preferably, used in the optical amplifier of the present invention is a semiconductor type amplifier.

Preferably, used as the wavelength selecting element of the present invention is a grating, a dielectric filter, a Fabry Perot etalon, an electric optics, an acoustic optics, an optical waveguide element, or a double reflective optics.

Preferably, in the present invention, conditions for the drive current and the like of the output light source are set in such a manner that a required parameter of the demodulated signal received becomes optimum.

## Claims

1. Optical transmitting apparatus comprising:
a directly-modulatable output light source (11) for generating a light signal to be transmitted,
an optical fiber (13) for transmitting the light signal generated by said output light source (11),
wavelength selecting element (14) for performing an optical filtering of the transmitted light signal,
an optical/electrical converter (15) for performing an optical/electrical conversion of said transmitted light signal,
the demodulator (16) for demodulating the electrical signal converted by said optical/electrical converter (15) to a required signal, and
**characterized by**
a control section (27) coupled between the output of said demodulator (6) and said wavelength selecting element (14) adapted to set and follow-up control the central wavelength of a passing band of said wavelength selecting element (14) displaced from the central wavelength of a generated wavelength of said output light source (11) such that a required signal parameter in the demodulated signal becomes optimum.

2. Optical transmitting apparatus as set forth in claim 1, wherein
the output light source (11) is directly modulated by an output signal, and said central wavelength of a passing band of said wavelength selecting element (14) is set to either a short wavelength side or a long wavelength side with respect to the central wavelength of the generated wavelength of said light outputting source.

3. Optical transmitting apparatus according to claim 1,
**characterized in that**
said central wavelength of a passing band of said wavelength selecting element is controlled by said control section (27) in such a manner that a signal-to-noise ratio or a carrier signal-to-noise ratio in the demodulated signal of said demodulator becomes maximum or lies over a certain value.

4. Optical transmitting apparatus according to claim 1 or 3,
**characterized in that**
the central wavelength of a passing band of said wavelength selecting element is controlled by said control section (27) in such a manner that an error rate in the demodulated signal of said demodulator becomes minimum or lies under a certain value, or that a distortion in said demodulated signal becomes minimum or lies under a certain value, or that a jitter in said demodulated signal becomes minimum or lies under a certain value.

5. Optical transmitting apparatus as set forth in any one of claims 1 through 4, wherein a light source generating a light with a single wavelength is used for the output light source (11).

6. Optical transmitting apparatus according to one of claims 1 through 5,
**characterized in that**
said output light source includes a plurality of output light sources which can be directly modulated and generate lights with single wavelengths different from each other, and
said apparatus further comprises an optical coupler (117).

7. Optical transmitting apparatus according to claim 6,
**characterized in that**
said wavelength selecting element (14) is an optical branching device (169) coupled to a plurality of signal receiving sections each comprising an optical/electrical converter (165) and a demodulator (166).

8. Optical transmitting apparatus as set forth in claim 7, wherein
the output light source is directly modulated by an output signal, and
the central wavelength of a passing band corresponding to each channel of said optical branching device is set to either a short wavelength side or a long wavelength side with respect to the central wavelength in each generated wavelength of said output light source.

9. Optical transmitting apparatus according to claim 7, wherein
both a drive current of said output light source and the central wavelength of a passing band corresponding to each channel of said optical branching device are set by said control section (27) in such a manner that a signal-to-noise ratio of the demodulated signal becomes maximum or lies over a certain value, or that a carrier signal-to-noise ratio of the demodulated signal becomes maximum or lies over a certain value, or that an error rate of the demodulated signal becomes minimum or lies under a certain value, or that a distortion of the demodulated signal becomes minimum or lies under a certain value, or that a jitter of the demodulated signal becomes minimum or lies under a certain value.

10. Optical transmitting apparatus according to claim 7,
the central wavelength of a passing band corresponding to each channel of said optical branching device is controlled by said control section (27) in such a manner that a signal-to-noise ratio in a demodulated signal of said demodulator becomes maximum or lies over a certain value, or that a carrier signal-to-noise ratio in said demodulated signal becomes maximum or lies over a certain value, or that an error rate in said demodulated signal becomes minimum or lies under a certain value, or that a distortion in said demodulated signal becomes minimum or lies under a certain value, or that a jitter of the demodulated signal becomes minimum or lies under a certain value.

11. Optical transmitting apparatus according to any of claims 1 to 10,
**characterized in that**
said apparatus further comprises at least one optical amplifier (58,68) for amplifying said transmitted light signal.

12. Optical transmitting apparatus according to any of claims 1 to 11,
**characterized in that**
a plurality of signal receiving sections each comprising a wavelength selecting element (144), an optical/electrical converter (145) and a demodulator (146) is coupled to said optical fiber (143) and **in that** at least one of said wavelength selecting elements (144) is controlled by said control section (147).

## Patentansprüche

1. Optische Übertragungsvorrichtung, die umfasst:
eine direkt modulierbare Ausgangslichtquelle (11), die ein zu übertragendes Lichtsignal erzeugt,
eine Lichtleitfaser (13), die das von der Ausgangslichtquelle (11) erzeugte Lichtsignal überträgt,
ein Wellenlängen-Auswählelement (14), das optisches Filtem des übertragenen Lichtsignals ausführt,
einen optoelektronischen Wandler (15), der optoelektronische Umwandlung des übertragenen Lichtsignals ausführt,
den Demodulator (16), der das von dem optoelektronischen Wandler (15) umgewandelte elektrische Signal in ein benötigtes Signal demoduliert, und
**gekennzeichnet durch:**
einen Steuerabschnitt (17), der zwischen den Ausgang des Demodulators (6) und das Wellenlängen-Auswählelement (14) geschaltet ist und die Mittenwellenlänge eines Durchlassbereiches des Wellenlängen-Auswählelementes (14), die gegenüber der Mittenwellenlänge einer von der Ausgangslichtquelle (11) erzeugten Wellenlänge verschoben ist, einstellt und Folgesteuerung unterzieht, so dass ein erforderlicher Signalparameter in dem demodulierten Signal ein Optimum erreicht.

2. Optische Übertragungsvorrichtung nach Anspruch 1, wobei:
die Ausgangslichtquelle (11) durch ein Ausgangssignal direkt moduliert wird und die Mittenwellenlänge eines Durchlassbereiches des Wellenlängen-Auswählelementes (14) entweder auf eine Seite kurzer Wellenlänge oder eine Seite langer Wellenlänge in Bezug auf die Mittenwellenlänge der von der Ausgangslichtquelle erzeugten Wellenlänge eingestellt wird.

3. Optische Übertragungsvorrichtung nach Anspruch 1,
**dadurch gekennzeichnet, dass**:
die Mittenwellenlänge eines Durchlassbereiches des Wellenlängen-Auswählelementes durch den Steuerabschnitt (27) so gesteuert wird, dass ein Signal-Rausch-Verhältnis oder ein Trägersignal-Rausch-Verhältnis in dem von dem Demodulator demodulierten Signal ein Maximum erreicht oder über einem bestimmten Wert liegt.

4. Optische Übertragungsvorrichtung nach Anspruch 1 oder 3,
**dadurch gekennzeichnet, dass**:
die Mittenwellenlänge eines Durchlassbereiches des Wellenlängen-Auswählelementes von dem Steuerabschnitt (27) so gesteuert wird, dass eine Fehlerrate in dem von dem Demodulator demodulierten Signal ein Minimum erreicht oder unter einem bestimmten Wert liegt, oder dass eine Verzerrung in dem demodulierten Signal ein Minimum erreicht oder unter einem bestimmten Wert liegt, oder dass ein Jitter in dem demodulierten Signal ein Minimum erreicht oder unter einem bestimmten Wert liegt.

5. Optische Übertragungsvorrichtung nach einem der Ansprüche 1 bis 4, wobei eine Lichtquelle, die ein Licht mit einer einzelnen Wellenlänge erzeugt, als die Ausgangslichtquelle (11) eingesetzt wird.

6. Optische Übertragungsvorrichtung nach einem der Ansprüche 1 bis 5,
**dadurch gekennzeichnet, dass**:
die Ausgangslichtquelle eine Vielzahl von Ausgangslichtquellen enthält, die direkt moduliert werden können und jeweils Licht mit einzelnen Wellenlängen erzeugen, die sich voneinander unterscheiden, und
die Vorrichtung des Weiteren einen optischen Koppler (117) umfasst.

7. Optische Übertragungsvorrichtung nach Anspruch 6,
**dadurch gekennzeichnet, dass**:
das Wellenlängen-Auswählelement (14) eine optische Verzweigungsvorrichtung (169) ist, die mit einer Vielzahl von Signalempfangsabschnitten verbunden ist, die jeweils einen optoelektronischen Wandler (165) und einen Demodulator (166) umfassen.

8. Optische Übertragungsvorrichtung nach Anspruch 7, wobei:
die Ausgangslichtquelle direkt durch ein Ausgangssignal moduliert wird, und
die Mittenwellenlänge eines Durchlassbereiches, die jedem Kanal der optischen Verzweigungsvorrichtung entspricht, entweder auf eine Seite kurzer Wellenlänge oder eine Seite langer Wellenlänge in Bezug auf die Mittenwellenlänge jeder von der Ausgangslichtquelle erzeugten Wellenlänge eingestellt wird.

9. Optische Übertragungsvorrichtung nach Anspruch 7, wobei:
sowohl ein Ansteuerstrom der Ausgangslichtquelle als auch die Mittenwellenlänge eines Durchlassbereiches entsprechend jedem Kanal der optischen Verzweigungsvorrichtung durch den Steuerabschnitt (27) so eingestellt werden, dass ein Signal-Rausch-Verhältnis des demodulierten Signals ein Maximum erreicht oder über einem bestimmten Wert liegt, oder dass ein Trägersignal-Rausch-Verhältnis des demodulierten Signals ein Maximum erreicht oder über einem bestimmten Wert liegt, oder dass eine Fehlerrate des demodulierten Signals ein Minimum erreicht oder unter einem bestimmten Wert liegt, oder dass eine Verzerrung des demodulierten Signals ein Minimum erreicht oder unter einem bestimmten Wert liegt, oder dass ein Jitter des demodulierten Signals ein Minimum erreicht oder unter einem bestimmten Wert liegt.

10. Optische Übertragungsvorrichtung nach Anspruch 7,
wobei die Mittenwellenlänge eines Durchlassbereiches entsprechend jedem Kanal der optischen Verzweigungsvorrichtung durch den Steuerabschnitt (27) so gesteuert wird, dass ein Signal-Rausch-Verhältnis in einem von dem Demodulator demodulierten Signal ein Maximum erreicht oder über einem bestimmten Wert liegt, oder dass ein Trägersignal-Rausch-Verhältnis in dem demodulierten Signal ein Maximum erreicht oder über einem bestimmten Wert liegt, oder dass eine Fehlerrate in dem demodulierten Signal ein Minimum erreicht oder unter einem bestimmten Wert liegt, oder dass eine Verzerrung in dem demodulierten Signal ein Minimum erreicht oder unter einem bestimmten Wert liegt, oder dass ein Jitter des demodulierten Signals ein Minimum erreicht oder unter einem bestimmten Wert liegt.

11. Optische Übertragungsvorrichtung nach einem der Ansprüche 1 bis 10,
**dadurch gekennzeichnet, dass**:
die Vorrichtung des Weiteren wenigstens einen optischen Verstärker (58, 68) umfasst, der das übertragene Lichtsignal verstärkt.

12. Optische Übertragungsvorrichtung nach einem der Ansprüche 1 bis 11,
**dadurch gekennzeichnet, dass**:
eine Vielzahl von Signalempfangsabschnitten, die jeweils ein Wellenlängen-Auswählelement (144), einen optoelektronischen Wandler (145) und einen Demodulator (146) umfassen, mit der Lichtleitfaser (143) verbunden ist, und dass wenigstens eines der Wellenlängen-Auswähtelemente (144) von dem Steuerabschnitt (147) gesteuert wird.

## Revendications

1. Appareil de transmission optique comprenant :
une source lumineuse à sortie directement modulable (11) destinée à générer un signal lumineux devant être transmis,
une fibre optique (13) destinée à transmettre le signal lumineux généré par ladite source lumineuse de sortie (11),
un élément de sélection de longueur d'onde (14) destiné à réaliser un filtrage optique du signal lumineux transmis,
un convertisseur optique/électrique (15) destiné à réaliser une conversion optique/électrique dudit signal lumineux transmis,
un démodulateur (16) destiné à démoduler le signal électrique converti par ledit convertisseur optique/électrique (15) en un signal requis, et
**caractérisé par**
une section de commande (27) couplée entre la sortie dudit démodulateur (6) et ledit élément de sélection de longueur d'onde (14) adapté pour rétablir et réguler la commande de la longueur d'onde centrale d'une bande passante dudit élément de sélection de longueur d'onde (14) déplacé de la longueur d'onde centrale d'une longueur d'onde générée de ladite source de lumière de sortie (11) d'une manière telle qu'un paramètre de signal requis dans le signal démodulé devienne optimal.

2. Appareil de transmission optique selon la revendication 1, dans lequel
la source lumineuse de sortie (11) est directement modulée par un signal de sortie, et ladite longueur d'onde centrale d'une bande passante dudit élément de sélection de longueur d'onde (14) est établie soit à un côté de longueur d'onde longue par rapport à la longueur d'onde centrale de la longueur d'onde générée de ladite source de sortie de lumière.

3. Appareil de transmission optique selon la revendication 1,
**caractérisé en ce que**
ladite longueur d'onde centrale d'une bande passante dudit élément de sélection de longueur d'onde est commandée par ladite section de commande (27) d'une manière telle qu'un rapport signal/bruit ou qu'un rapport signal/bruit de porteuse dans le signal démodulé dudit démodulateur devienne maximal ou se trouve au-dessus d'une certaine valeur.

4. Appareil de transmission optique selon la revendication 1 ou 3
**caractérisé en ce que**
la longueur d'onde centrale d'une bande passante dudit élément de sélection de longueur d'onde est commandée par ladite section de commande (27) d'une manière telle qu'un taux d'erreur du signal démodulé dudit démodulateur devienne minimal ou soit au-dessous d'une certaine valeur, ou qu'une distorsion dudit signal démodulé devienne minimale ou soit au-dessous d'une certaine valeur, ou qu'une instabilité dudit signal démodulé deviennent minimale ou soit au-dessous d'une certaine valeur.

5. Appareil de transmission optique selon l'une quelconque des revendications 1 à 4, dans lequel une source lumineuse générant une lumière avec une longueur d'onde unique est utilisée pour la source lumineuse de sortie (11).

6. Appareil de transmission optique selon l'une quelconque des revendications 1 à 5,
**caractérisé en ce que**
ladite source lumineuse de sortie comprend une pluralité de sources lumineuses de sortie qui peuvent être directement modulées et génèrent des lumières avec les longueurs d'onde uniques différentes les unes des autres, et
ledit appareil comprend de plus un coupleur optique (117).

7. Appareil de transmission optique selon la revendication 6,
**caractérisé en ce que**
ledit élément de sélection de longueur d'onde (14) est un dispositif de dérivation optique (169) couplé à une pluralité de sections de réception de signaux comprenant chacune un convertisseur optique/électrique (165) et un démodulateur (166).

8. Appareil de transmission optique selon la revendication 7, dans lequel
la source lumineuse de sortie est directement modulée par un signal de sortie, et
la longueur d'onde centrale d'une bande passante correspondant à chaque canal dudit dispositif de dérivation optique est établie soit à un côté longueur d'onde courte soit à un côté de longueur d'onde longue par rapport à la longueur d'onde centrale de chaque longueur d'onde générée de ladite source lumineuse de sortie.

9. Appareil de transmission optique selon la revendication 7, dans lequel
à la fois un courant d'attaque de ladite source lumineuse de sortie et la longueur d'onde centrale d'une bande passante correspondant à chaque canal dudit dispositif de dérivation optique sont établies par ladite section de commande (27) d'une manière telle qu'un rapport signal/bruit du signal démodulé devienne maximal ou soit sur au-dessus d'une certaine valeur, ou qu'un rapport signal/bruit de porteuse du signal démodulé devienne maximal ou soit au-dessus d'une certaine valeur, ou qu'un taux d'erreur du signal démodulé devienne minimal ou soit au-dessous d'une certaine valeur, ou qu'une distorsion du signal démodulé devienne minimale ou soit au-dessous d'une certaine valeur, ou qu'une instabilité du signal démodulé devienne minimale ou soit au-dessous d'une certaine valeur.

10. Appareil de transmission optique selon la revendication 7,
la longueur d'onde centrale d'une bande passante correspondant à chaque canal dudit dispositif de dérivation optique est commandée par ladite section de commande (27) d'une manière telle qu'un rapport signal/bruit dans un signal démodulé dudit démodulateur devienne maximal ou soit au-dessus d'une certaine valeur, ou qu'un rapport signal/bruit de porteuse dudit signal démodulé devienne maximal ou soit au-dessus d'une certaine valeur, ou qu'un taux d'erreur dudit signal démodulé devienne minimal ou soit au-dessous d'une certaine valeur, ou qu'une distorsion dudit signal démodulé devienne minimale ou soit au-dessous d'une certaine valeur, ou qu'une instabilité du signal démodulé devienne minimale ou soit au-dessous d'une certaine valeur.

11. Appareil de transmission optique selon l'une quelconque des revendications 1 à 10,
**caractérisé en ce que**
ledit appareil comprend de plus au moins un amplificateur optique (58, 68) destiné à amplifier ledit source lumineuse transmis.

12. Appareil de transmission optique selon l'une quelconque des revendications 1 à 11,
**caractérisé en ce que**
une pluralité de sections de réception de signaux comprenant chacune un élément de sélection de longueur d'onde (144), un convertisseur optique/électrique (145) et un démodulateur (146) est couplée à ladite fibre optique (143) et **en ce que** au moins un desdits éléments de sélection de longueur d'onde (144) est commandé par ladite section de commande (147).
